# EUROPÄISCHE PATENTANMELDUNG

(11) **EP 1 285 829 A1**
(43) Veröffentlichungstag der Anmeldung: **26.02.2003**
(21) Anmeldenummer: 01890231.2
(22) Anmeldetag: 13.08.2001
(51) Int. Cl.: B60R 25/04

(54) **Sicherheitseinrichtung gegen Diebstahl oder unerlaubte Benützung geschützter Gegenstände**

(71) Anmelder: Koukal, Jiri, 678 01 Blansko (CZ)
(72) Erfinder: Koukal, Jiri, 678 01 Blansko (CZ)
(74) Vertreter: Heger, Georg, Dipl.-Ing., Dr.

(57) **Zusammenfassung**

Die Sicherheitseinrichtung beinhaltet eine Einstelleinheit (1) zur Ingangsetzung des geschützten Gegenstandes, welche geeignet ist, Code und Kommunikationen zu lesen und mindestens zwei Speichern (2, 3) für die Aufnahme von Codes, von welchen einer in einem transportablen Träger (4) und, der andere in eine Steuereinheit (5) eingebaut ist. Die Steuereinheit (5) ist mit einer Einstelleinheit (1) verbunden und einerseits zur Auswertung der Codes und der Kommunikation mit der Einstelleinheit (1) und andererseits zur Steuerung mindestens eines Moduls (6), welcher für den Betrieb des geschützten Gegenstandes erforderlich ist, verbunden ist, wobei das Entblocken des Betriebes des geschützten Gegenstandes bei Übereinstimmung dieser Codes ermöglicht wird. Die Steuereinheit (5) ist einerseits mit dem Zufuhrelement (7) der Einstelleinheit (1) und bzw. oder mit der Einstelleinheit (1) und andererseits mit mindestens einem Zufuhrelement (8) des Moduls (6) und bzw. oder mit zumindest einem Modul (6) fest verbunden.

## Beschreibung

Die Erfindung betrifft eine Sicherheitseinrichtung gegen Diebstahl oder unerlaubte Benützung geschützter Gegenstände, insbesondere von Motorfahrzeugen, mit einer Einstelleinheit zum Ingangsetzen des geschützten Gegenstandes, welche zum Lesen eines Codes und zum Übermitteln ausgebildet ist, und mindestens zwei Speichern zur Lagerung des Codes, von welchen einer in einem tragbaren Träger und ein zweiter in einer Steuereinheit eingebaut ist, welche mit der Einstelleinheit verbunden und einerseits zur Auswertung des Codes und zur Übermittlung der Einstelleinheit und andererseits zur Steuerung mindestens eines Moduls, welcher für die Ingangsetzung des geschützten Gegenstandes erforderlich ist, angepasst ist, und bei Übereinstimmung dieser Codes möglich ist, den Gang des geschützten Gegenstandes zu entblocken.

Gegenwärtig ist eine große Anzahl von Sicherheitseinrichtungen gegen Diebstahl oder unerlaubten Betrieb geschützter Gegenstände, z.B. von Motorfahrzeugen, bekannt geworden. Diese Einrichtungen beruhen auf dem Prinzip, das darin gelegen ist, dem nicht berechtigten Benützer die Möglichkeit den geschützten Gegenstand zu benutzen oder den Zutritt zum geschützten Objekt zu erschweren. Organisierte Gruppen, die Diebstähle ausüben, sind aber mit modernsten Techniken ausgerüstet und die Überlistung der Sicherheitseinrichtungen ist für sie daher kein großes Problem. Im Grunde geht es um die Länge der Zeit, welche zur Überwindung solcher Einrichtungen erforderlich ist. Je größer diese Zeit ist, umso größer ist die Hoffnung, dass der Missetäter unmittelbar bei der Missetat gefasst wird.

Im Grunde kann man Sicherheitseinrichtungen in mechanische, elektronische oder kombinierte unterteilen. Was Motorfahrzeuge betrifft, sind es verschiedene mechanische Schlösser, welche nicht berechtigte Personen hindern, Einstelleinrichtungen des Fahrzeuges, wie das Lenkrad, den Steuerhebel, die Kupplung oder Bremsen zu betätigen. Weiter sind es Einrichtungen zum Blockieren elektrischer Systeme der Fahrzeuge, verschiedene akustische Alarme und ähnliche. Ebenso ist eine Lösung bekannt, gemäß der das Fahrzeug mit zwei unbeweglichen elektronischen Speichern zur Lagerung des Codes ausgestattet ist. Ein Speicher ist im Code des Schlüssels eingebaut, mit welchem das Fahrzeug gestartet wird und der zweite in der Lenkeinheit, welche einzelne elektronische Systeme der Steuerungen enthält, welche für den Betrieb des Fahrzeuges erforderlich sind, beispielsweise Einspritzung, Zündung, Steuerung des Leerganges, der eigenen Diagnostik und ähnliches. Beim Einlegen des Codeschlüssels in den Schaltkasten des Fahrzeuges wird der Schlüsselcode mit dem in der Lenkeinheit eingebrachten Code verglichen, und wenn beide Codes übereinstimmen ist es möglich, das Fahrzeug zu starten. Falls ein Schlüssel mit unterschiedlichem Code oder ohne Code verwendet wird, kann das Fahrzeug nicht gestartet werden. Der im Fahrzeug installierte unbewegliche Teil ist ebenfalls eine vollendete Einrichtung, welche ihrem Prinzip nach unübertrefflich wäre, da sie bei Starten eines Fahrzeuges nur den Besitzer eines Schlüssels mit dem richtigen Code ermöglicht. Der Nachteil dieser Lösung ist die Tatsache, dass die Lenkeinheit eine Einrichtung ist, welche verhältnismäßig leicht ausgewechselt werden kann. Diese Tatsache nützen organisierte Personengruppen aus, die sich auf Diebstahl von Motorfahrzeugen spezialisiert haben. Ein Fahrzeug, welches ein Festgerät eingebaut hat, kann auf folgende Weise entfremdet werden: Der Verbrecher öffnet das Fahrzeug mit Hilfe eines Bindfadens. Soweit ein Alarm installiert ist, welcher ertönt, öffnet er die Haube, trennt die Zuleitung zur Alarmhupe und damit schaltet er die Tätigkeit des Alarmes aus. Danach zieht er aus der Steuereinheit das Zufuhrkabel, welches die Steuereinheit mit der Einstelleinheit verbindet und schließt das Zufuhrkabel auf seine eigene Steuereinheit an, welche er zu diesem Zwecke gebracht hat. Die mitgebrachte Steuereinheit hat einen dem Verbrecher bekannten Code oder muss keinen Code haben. Der Verbrecher schließt die Haube, setzt sich in das Fahrzeug und startet es mit dem früher erzeugten Schlüssel, welcher den Code beinhaltet, der mit dem Code der mitgebrachten Steuereinheit übereinstimmt oder mit einem Schlüssel ohne Code. Gegebenenfalls bricht er das Schloss aus. Soweit das Fahrzeug keine anderen Sicherheitsvorrichtungen besitzt, kann er mit ihm wegfahren. Die Zeit für den Diebstahl eines solchen Fahrzeuges, falls der Verbrecher vorher vorbereitet ist, ist nicht länger als 30 Sekunden.

Die oben angeführten Mängel beseitigen bis zu einem bestimmten Grad eine Sicherheitseinrichtung gegen Diebstahl oder unbefugte Benützung geschützter Gegenstände, insbesondere Motorfahrzeuge mit einer Einstelleinheit, die zum Lesen eines Codes und für die Übermittlung geeignet ist, und mit mindestens zwei Speicher zur Unterbringung von Coden, von welchen einer in einem tragbaren Träger und ein zweiter in einer Steuereinheit eingebaut ist, die mit der Einstelleinheit verbunden ist, welche einerseits zur Auswertung des Codes und die Verbindung mit der Einstelleinheit und andererseits zur Steuerung mindestens eines Moduls ausgebildet ist, welcher für den Betrieb des geschützten Gegenstandes erforderlich ist, wobei das Entblocken des Betriebes des geschützten Gegenstandes bei Übereinstimmung ermöglicht wird, wobei die Erfindung darin besteht, dass die Steuereinheit einerseits mit dem Zufuhrelement der Einstelleinheit und/oder mit der Einstelleinheit und/oder andererseits mit mindestens einem Modul verbunden ist.

In der Ausführung für Motorfahrzeuge bildet der Schaltkasten des Fahrzeuges, welcher von einem zur Auswertung des Codes Berufenen ausgestattet wurde, die Einstelleinheit und den tragbaren Träger der Schlüssel.

Die feste Verbindung der Steuereinheit mit dem Zufuhrelement der Einstelleinheit und dem Zufuhrelement des Moduls kann mit Hilfe mindestens einer Sicherheitshülse oder einer Hülse, deren Enden durch ein besonderes Schloss verschlossen sind, durchgeführt werden, wobei die Hülse die Steuereinheit und die Zufuhrelemente fest umschließt.

Die feste Verbindung der Steuereinheit mit dem Zufuhrelement der Einstelleinheit und dem Zufuhrelement des Moduls kann auch in der Weise durchgeführt werden, dass die Steuereinheit und die Zufuhrelemente im Kasten angeordnet sind, in dem sie mit einer aushärtbaren Masse angegossen sind oder der Kasten mit einem Sonderschloss verschlossen ist.

Die feste Verbindung der Steuereinheit, des Zufuhrelementes der Einstelleinheit und des Zufuhrelementes des Moduls ist so ausgeführt, dass alle diese Bestandteile als einstückiges Ganzes. ausgebildet sind.

Um auf eine unerlaubte Manipulation mit dem geschützten Gegenstand rechtzeitig aufmerksam zu machen ist es vorteilhaft, dass die Steuereinheit und die Zufuhrelemente der Einstelleinheit und des Moduls mit einem gemeinsamen die unerlaubte Manipulation anzeigenden Signal versehen sind. In Ausführung, bei welcher die Steuereinheit und die Zufuhrelemente der Einstelleinheit und des Moduls im Kasten angeordnet sind, ist mit einem solchen Signal der Kasten ausgestattet. Um eine unerlaubte Manipulation zu verhindern, kann die Steuereinheit an einem unzugänglichen Ort angeordnet sein.

Die Sicherheitseinrichtung gemäß der Erfindung macht das Lösen einzelner Teile dieser Einrichtung von dem geschützten Gegenstand unmöglich, da sie das Lösen der Steuereinheit mit dem eingebauten Code von der Einstelleinheit oder umgekehrt, die zum Lesen des Codes in einem tragbaren Träger ausgebildet ist und von Modulen, welche für den Betrieb des geschützten Gegenstandes erforderlich sind, verhindert. Der Austausch eingebauter Steuereinheiten durch eine Ersatz-Steuereinheit mit einem dem Missetäter des Diebstahles bekannten Code oder ohne Code ist nicht einfach möglich. Damit kann der Festteil nicht aus dem Betrieb genommen werden. Somit schützt die beschriebene Sicherheitseinrichtung den geschützten Gegenstand gegen Diebstahl, da die bisher einzig bekannte Art der Überwältigung des Festteiles ein Ausschalten aus dem Betrieb oder sehr kompliziertes Dekodieren ist, das jedoch beim eigentlichen Diebstahl technisch nicht möglich ist.

In den angeschlossenen Zeichnungen sind erfindungsgemäße Ausführungsbeispiele der Sicherheitseinrichtung gegen Diebstahl oder unerlaubte Benützung geschützter Gegenstände schematisch dargestellt.

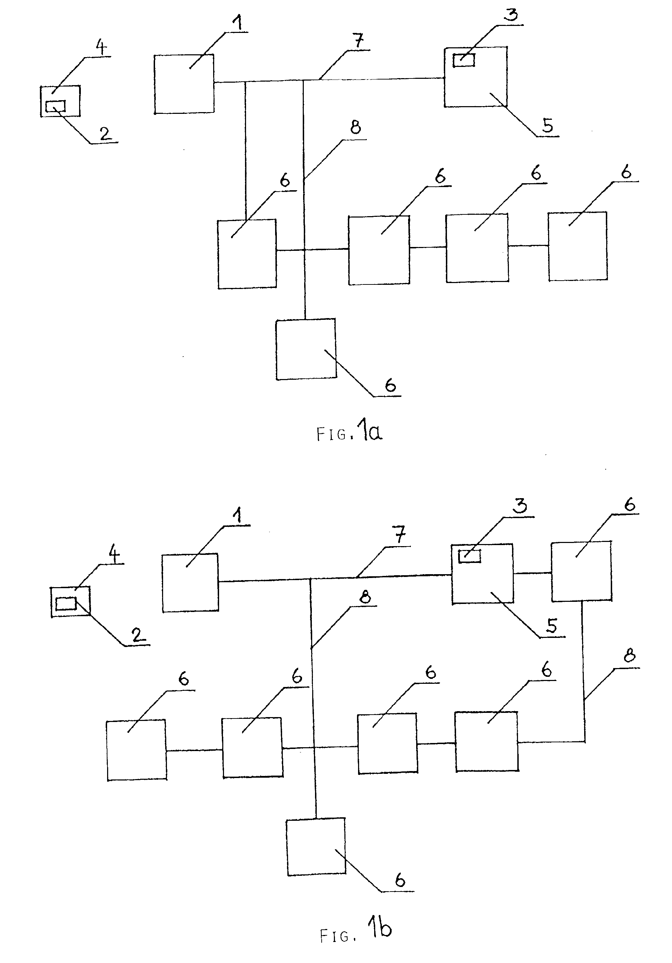

In den Fig. 1a und 1b sind Blockschemen der Verbindung der Steuereinheit mit der Einstelleinheit und den einzelnen Modulen dargestellt,
Fig. 2 stellt die feste Verbindung der Steuereinheit und der Zufuhrelemente der Einstelleinheit und des Moduls mit Hilfe zweier Sicherheitshülsen dar,
in Fig. 3 ist die feste Verbindung der Steuereinheit und der Zufuhrelemente der Einstelleinheit und des Moduls mit Hilfe zweier Hülsen deren Enden verschlossen sind,
Fig. 4 stellt die Anordnung der Steuereinheit und der Zufuhrelemente der Einstelleinheit und des Moduls im Kasten dar, in dem sie durch eine aushärtbare Masse eingegossen sind,
Fig. 5 zeigt die Anordnung der Steuereinheit und der Zufuhrelemente in einem durch ein Spezialschloss versperrten Kasten,
in Fig. 6 ist die Ausbildung einer Steuereinheit, des Zufuhrelementes der Einstelleinheit, die Einstelleinheiten und des Zufuhrelementes eines Moduls als einstückiges Ganzes dargestellt, und
in den Fig. 7 und 8 ist die Anordnung gemäß den Fig. 3, 5 mit Signalteilen einer unerlaubten Manipulation dargestellt.

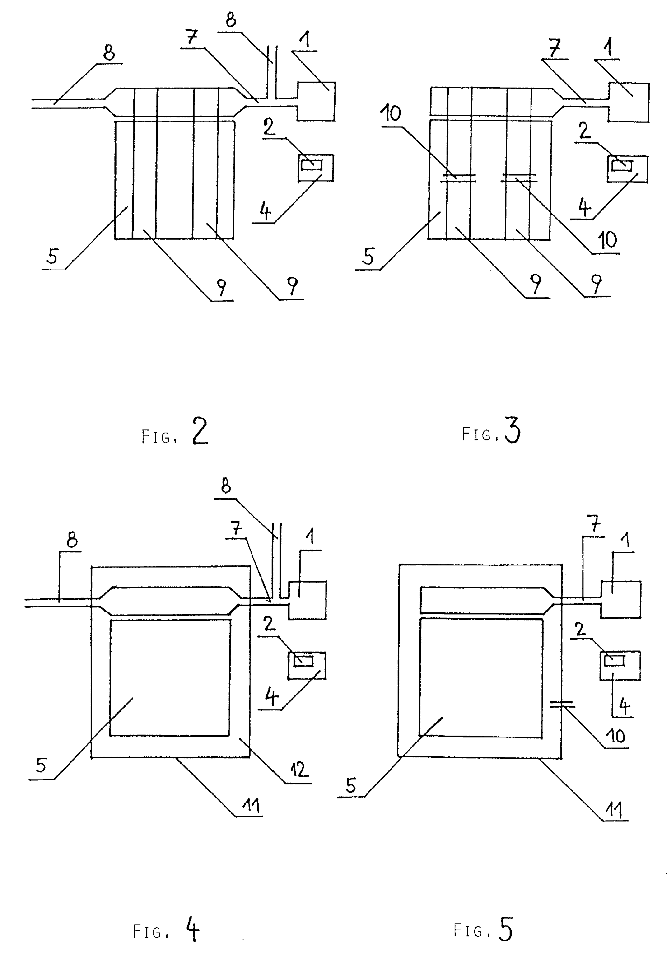

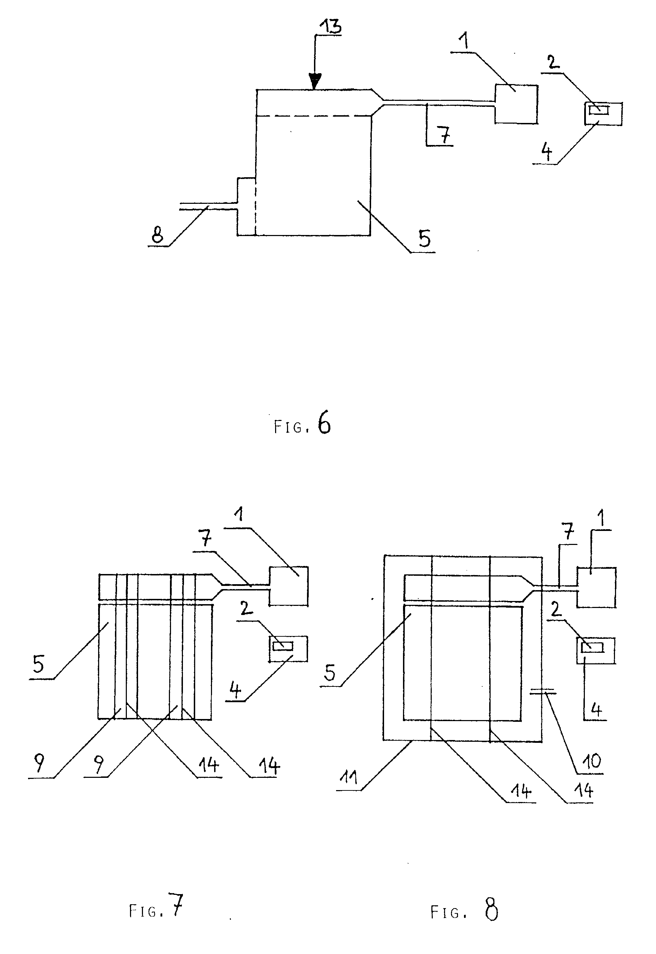

Die Sicherheitseinrichtung gegen Diebstahl oder unerlaubte Benützung geschützter Gegenstände besteht aus einer Einstelleinheit 1, welche für die Ingangsetzung des geschützten Gegenstandes dient und zwei Speichern 2, 3, zum Beispiel elektronischer Chips, zum Einspeichern von Codes. Die Einstelleinheit 1 ist mit einer Einrichtung zum Lesen von Codes ausgestattet. Bei Fahrzeugen ist die Einstelleinheit 1 ein Schaltkasten des Fahrzeuges, welcher mit einer Einrichtung zum Lesen und Auswerten der Codes versehen ist und für die Verbindungen ausgebildet ist. Der erste Speicher 2 ist im tragbaren Träger 4 des Codes eingebaut, welcher ein Schlüssel, eine Karte und dergl. sein kann. Der zweite Speicher 3 ist in der Steuereinheit 5 eingebaut, welche für die Auswertung des in der Einstelleinheit 1 des transportablen Trägers 4 abgelesenen Codes und für die Verbindungen mit der Einstelleinheit 1 ausgebildet ist. Die Steuereinheit 5 ist weiters an die Steuerung der einzelnen Module 6 angepasst, welche für den Betrieb des geschützten Gegenstandes erforderlich sind. Bei Fahrzeugen stellen die Module 6 einzelne elektronische Systeme für die Steuerung der Einspritzung, der Zündung, für die Steuerung des Leerganges der eigenen Diagnostik und dergleichen dar. Die Steuereinrichtung 5 ist mechanisch fest mit der Einstelleinheit 1 des Zufuhrelementes 7 zum Beispiel durch ein Kabel und mit den Modulen 6 der Zufuhrelemente 8 verbunden, wobei die Zufuhrelemente 7, 8 an eine gemeinsame Klemme angeschlossen sein können. Wie aus den Figuren 2 bis 5 hervorgeht, ist die mechanisch feste Verbindung zwischen der Steuereinheit 5, dem Zufuhrelement 7, der Einstelleinheit 1 und dem Zufuhrelement 8 des Moduls 6 mit Hilfe zweier Sicherheitshülsen 9 abgesichert, welche die Steuereinheit 5 und die Zufuhrelemente 7, 8 fest umschließen und deren Enden durch Schweißen oder Nieten so verbunden sind, dass sie einen geschlossenen Ring bilden oder ihre Enden sind durch ein Spezialschloss 10 versperrt. Die feste Verbindung der Steuereinheit 5 mit dem Zufuhrelement 7 der Einstelleinheit 1 und dem Zufuhrelement 8 des Moduls 6 kann auch so gesichert sein, dass die Steuereinheit 5 und die Zufuhrelemente 7, 8 in einem Kasten 11 angeordnet sind und entweder durch eine aushärtbare Masse 12 vergossen sind oder der Kasten 11 ist durch ein Spezialschloss 10 versperrt. Wie in Figur 6 dargestellt, kann die feste Verbindung auch so gesichert sein, dass die Steuereinheit 5, das Zufuhrelement 7, die Einstelleinheit 1 und das Zuleitungselement 8 als einstückiges Ganzes 13 ausgebildet sind. Eine unerlaubte.Manipulation mit der Steuereinheit 5 kann auch durch ihre Unterbringung an einem unzugänglichen Ort verhindert werden, wobei als unzugänglich ein solcher Ort betrachtet wird, zu dem der Zutritt nur um den Preis einer wenigstens teilweisen Zerstörung des geschützten Gegenstandes oder eines Teiles desselben ermöglicht wird, gegebenenfalls ein Ort, zu dem der Zugang so kompliziert und zeitlich aufwendig ist, dass die Manipulation mit der Steuereinheit 5 lediglich beim Erzeuger des geschützten Gegenstandes oder in speziellen Servicezentren durchgeführt werden können. Alle oben beschriebenen Durchführungen können durch eine Einrichtung 14 ergänzt werden, welche eine unerlaubte Manipulation signalisiert.

Falls ein geschützter Gegenstand, zum Beispiel ein Fahrzeug, in Betrieb genommen wird ist es erforderlich, den transportablen Träger 4 des Codes, z.B. einen Schlüssel, in die Einstelleinheit 1, zum Beispiel einen Schaltkasten, in ein Schloss des Fahrzeuges einzulegen, in dem es zum Ablesen des Codes und Senden eines zugehörigen Signals in die Steuereinheit 5 kommt. Die Steuereinheit 5 vergleicht den Code des Speichers, welcher im transportablen Träger 4 eingelegt ist, mit dem Code des Speichers der darin eingebaut ist, und falls beide Codes übereinstimmen, ermöglicht dies den geschützten Gegenstand in Betrieb zu nehmen, zum Beispiel das Fahrzeug zu starten. Falls die Codes nicht übereinstimmen, kann der geschützte Gegenstand nicht in Betrieb genommen werden, im Gegenteil, es wird die Signaleinrichtung ausgelöst, welche die unerlaubte Manipulation mit dem geschützten Gegenstand meldet.

Die erfindungsgemäße Sicherheitseinrichtung kann nicht nur gegen Diebstahl oder unerlaubte Benützung von Motorfahrzeugen verwendet werden, sondern auch dort, wo zum Schutz eines Gegenstandes oder Objektes Sicherheitseinrichtungen benutzt werden, die auf dem Prinzip zweier elektronischer Speicher mit gleichem Code arbeiten.

## Patentansprüche

1. Sicherheitseinrichtung gegen Diebstahl oder unerlaubte Benützung geschützter Gegenstände, insbesondere Motorfahrzeuge, bestehend aus einer Einstelleinheit zum Ingangsetzen des geschützten Gegenstandes, welche zum Lesen eines Codes und zum Übermitteln beispielsweise eines Impulses ausgebildet ist und zumindest zwei Speichern zur Aufnahme von Codes, von welchen einer in einem transportablen Träger und der andere in einer Steuereinheit eingebaut ist, welche mit der Einstelleinheit verbunden ist und einerseits zur Auswertung der Codes und der Verbindung mit der Einstelleinheit und andererseits zur Steuerung mindestens eines Moduls ausgebildet ist, welcher für den Betrieb des geschützten Gegenstandes erforderlich ist, wobei die Entblockierung des Betriebes des geschützten Gegenstandes bei Übereinstimmung dieser Codes ermöglicht wird, **dadurch gekennzeichnet, dass** die Steuereinheit (5) einerseits mit dem Zuleitungselement (7), der Einstelleinheit (1) und bzw. oder mit der Einstelleinheit (1) und andererseits mit zumindest einem Einstellelement (8) des Moduls (6) und bzw. oder mit mindestens einem Modul (6) mechanisch fest verbunden ist.

2. Sicherheitseinrichtung nach Anspruch 1, **dadurch gekennzeichnet, dass** die Einstelleinheit (1) den Schaltkasten des Fahrzeuges bildet, welcher mit einer Einrichtung zur Auswertung des Codes versehen ist und der transportable Träger (4) ein Schlüssel ist.

3. Sicherheitseinrichtung nach Anspruch 1, **dadurch gekennzeichnet, dass** die Steuereinheit (5), die Zuleitung (7) der Einstelleinheiten (1) und das Zuleitungselement (8) des Moduls (6) durch zumindest eine Sicherheitshülse (9) eng umschlossen sind.

4. Sicherheitseinrichtung nach Anspruch 1, **dadurch gekennzeichnet, dass** die Steuereinheit (5), das Zuleitungselement (7) der Einstelleinheit (1) und das Zuleitungselement (8) des Moduls (6) durch mindestens eine Sicherheitshülse (6) eng umschlossen sind, deren Enden durch ein Spezialschloss (10) versperrt sind.

5. Sicherheitseinrichtung nach Anspruch 1, **dadurch gekennzeichnet, dass** die Steuereinheit (5), das Zuleitungselement (7) der Einstelleinheit (1) und das Zuleitungselement (8) des Moduls (6) in einem Kasten (11) untergebracht sind und durch eine aushärtbare Masse vergossen sind.

6. Sicherheitseinrichtung nach Anspruch 1, **dadurch gekennzeichnet, dass** die Steuereinheit (5), das Zufuhrelement (7) der Einstelleinheit (1) und das Zufuhrelement (8) des Moduls (6) in einem durch ein Spezialschloss (10) versperrten Kasten (11) untergebracht sind.

7. Sicherheitseinrichtung nach Anspruch 1, **dadurch gekennzeichnet, dass** die Steuereinheit (5), das Zufuhrelement (7) der Einstelleinheit (1), die Einstelleinheit (1) und das Zufuhrelement (8) des Moduls (6) als monolitische Einheit ausgebildet sind.

8. Sicherheitseinrichtung nach den Ansprüchen 3 und 4, **dadurch gekennzeichnet, dass** die Steuereinheit (5), das Zufuhrelement (7) der Einstelleinheit (1) und das Zufuhrelement (8) des Moduls (6) mit einer gemeinsamen Signaleinrichtung (14) für unerlaubte Manipulationen versehen sind.

9. Sicherheitseinrichtung nach den Ansprüchen 5 und 6, **dadurch gekennzeichnet, dass** der Kasten (11) mit einer Signaleinrichtung (14) für unerlaubte Manipulationen versehen ist.

10. Signaleinrichtung nach Anspruch 1, **dadurch gekennzeichnet, dass** die Steuereinheit (5) an einem unzugänglichen Ort angeordnet ist.
